(19) Europäisches Patentamt
European Patent Office
Office européen des brevets

(11) Veröffentlichungsnummer: **0 274 098**
**A2**

(12) # EUROPÄISCHE PATENTANMELDUNG

(21) Anmeldenummer: **87118713.4**

(51) Int. Cl.4: **C08G 65/40**, C08J 3/12

(22) Anmeldetag: **17.12.87**

(30) Priorität: **24.12.86 DE 3644464**

(43) Veröffentlichungstag der Anmeldung:
**13.07.88 Patentblatt 88/28**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Bobbink, Hendrikus**
**Hans-Purrmann-Strasse 9**
**D-6708 Neuhofen(DE)**
Erfinder: **Fischer, Hermann, Dr.**
**Hardenburgstrasse 33**
**D-6703 Limburgerhof(DE)**
Erfinder: **Heinz, Gerhard, Dr.**
**Im Vogelsang 2**
**D-6719 Weisenheim(DE)**
Erfinder: **Matthias, Klaus, Dr.**
**Plauserstrasse 3**
**D-6719 Weisenheim(DE)**
Erfinder: **Seibring, Joachim, Dr.**
**Wiesenweg 5**
**D-6715 Lambsheim(DE)**
Erfinder: **Stegmaier, Wolfgang, Dr.**
**Im Wachtelschlag 6**
**D-6733 Hassloch(DE)**

(54) **Verfahren zur Erzeugung teilchenförmiger Polymerisate.**

(57) Verfahren zur Erzeugung teilchenförmiger Polymerisate aus aromatischen Diolen I und aromatischen Dihalogenverbindungen II durch

A) Erzeugen einer Vielzahl von Flüssigkeitsstrahlen aus einer Lösung der Polymerisate mit einer Düse

B) Herbeiführen des Zerfalls des Flüssigkeitsstrahls in gleichgroße Tropfen

C) Ausfällen der Tropfen durch Einbringen in ein Fällungsbad und

D) Entfernung der Lösungsmittelreste und sonstigen Verunreinigungen.

EP 0 274 098 A2

## Verfahren zur Erzeugung teilchenförmiger Polymerisate

Die Erfindung betrifft ein Verfahren zur Erzeugung teilchenförmiger Polymerisate, erhältlich durch Polykondensation von Diolen der allgemeinen Formel I

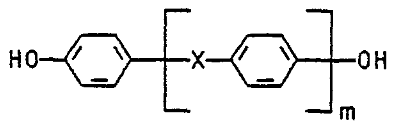

I

oder deren kernsubstituierten $C_1$-$C_6$-Alkyl-, $C_1$-$C_6$-Alkoxy-, Aryl-, Cl-oder F-Derivaten, mit Dihalogenverbindungen der allgemeinen Formel II

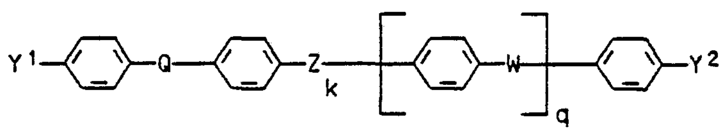

oder deren kernsubstituierten $C_1$-$C_6$-Alkyl-, $C_1$-$C_6$-Alkoxy-, Aryl-, Chlor-oder Fluorderivaten, wobei

X und Z eine chemische Bindung,

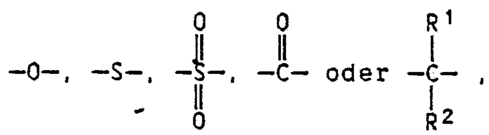

oder ,

$Y^1$ und $Y^2$ Cl oder F,

Q,W 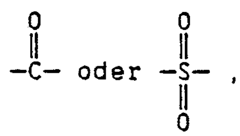

oder ,

$R^1$ und $R^2$ Wasserstoff, Alkylgruppen mit 1 bis 6 C-Atomen, Alkoxygruppen mit 1 bis 6 C-Atomen oder Arylgruppen oder deren halogenierte Derivate darstellen, und
k, m und q den Wert 0 oder 1 haben.

Polymerisate des vorstehend definierten Typs haben infolge ihrer guten Temperaturbeständigkeit in den letzten Jahren zunehmendes technisches Interesse erlangt.

Die Herstellung solcher Polymerisate erfolgt im allgemeinen durch Polykondensation der Ausgangsstoffe in polaren aprotischen Lösungsmitteln, in denen die gebildeten Polymerisate löslich sind. Vor der endgültigen Formgebung ist es jedoch erforderlich, die Lösungsmittel und eventuell zur Verbesserung der Löslichkeit oder als Katalysator zugesetzte Salze und andere Zusätze möglichst restlos zu entfernen, um eine Beeinträchtigung der Gebrauchseigenschaften zu vermeiden.

Aus der DE-A 24 03 660 ist ein Verfahren zum Isolieren pulverförmiger aromatischer Polymerer, unter anderem Polyethersulfonen, bekannt, gemäß dem eine Lösung der Polymeren durch eine sogenannte "Einstoffzerstäuberdüse" unter Druck in ein gerührtes Fällbad zerstäubt wird.

Unter Einstoffzerstäuberdüsen sind dabei Düsen zu verstehen, bei denen die zur Zerteilung der Flüssigkeit erforderliche Energie aus der unter Druck stehenden Flüssigkeit selbst stammt, d.h. Düsen, die mit reinem Flüssigkeitsdruck arbeiten.

Im russischen Patent 773 050 wird die Abscheidung von Polysulfonen aus Lösung durch Einbringen in ein stark gerührtes Scherfeld beschrieben. Ziel des Verfahrens ist die Erhöhung der Schüttdichte des Polysulfons, d.h. eine möglichst kleine Teilchengröße bzw. pulverförmige Produkte zu erhalten.

Beide bekannten Verfahren, das Versprühen mit Einstoffzerstäuberdüsen unter hohem Druck und das

Einbringen in ein stark gerührtes Scherfeld führen zu pulverförmigen Produkten mit einer breiten Korngrößenverteilung, die sich bei der anschließenden Weiterverarbeitung der Produkte nachteilig auswirkt, insbesondere beim Extrahieren, Trocknen und Konfektionieren.

In der DE-C 25 33 110 wird ein Verfahren zur koagulativen Gewinnung von Polyethersulfonen beschrieben, bei dem eine Lösung der Polymeren in einer Trägerphase als Tröpfchen dispergiert und die Dispersion mit einem aliphatischen Kohlenwasserstoff in einem turbulenten Scherfeld in Berührung gebracht wird, so daß die Tröpfchen vom Kohlenwasserstoff umhüllt werden. Anschließend werden die umhüllten Tröpfchen extrahiert und das organische Lösungsmittel und der aliphatische Kohlenwasserstoff entfernt. Die Teilchengröße der so erhaltenen Produkte beträgt maximal 250µm, ist also relativ gering. Nach diesem Verfahren hergestellte Teilchen mit einem Durchmesser von mehr als 250 µm besitzen ausweislich Spalte 6, Zeile - 60ff. nicht die für die Entfernung von Lösungsmittel und Verunreinigungen erwünschte Porenstruktur. Da es bei zu kleinen Teilchengrößen häufig zu Schwierigkeiten bei der Konfektionierung kommt, wäre es wünschenswert, teilchenförmige Polymerisate mit ausreichender Teilchengröße und einem schmalen Teilchengrößenspektrum zu haben.

Aufgabe der vorliegenden Erfindung war es daher, ein Verfahren zur Erzeugung von teilchenförmigen Polymerisaten zur Verfügung zu stellen, bei dem große Teilchen bei enger Teilchengrößenverteilung, vorzugsweise mit mittleren Teilchendurchmessern(Gewichtsmittelwert) im Bereich von 0,5 bis 2 mm, erhalten werden, deren Weiterverarbeitung gut möglich ist. Außerdem sollten die Teilchen vorzugsweise eine offenzellige Schaumstruktur aufweisen.

Diese Aufgabe wird erfindungsgemäß durch ein Verfahren zur Erzeugung teilchenförmiger Polymerisate der eingangs genannten Art gelöst, das dadurch gekennzeichnet ist, daß man

A) eine Lösung der Polymerisate aus einer Düse in einer Vielzahl von Flüssigkeitsstrahlen austreten läßt,

B) durch Versetzen der Düse in longitudinale oder transversale Schwingungen oder durch Pulsieren der Flüssigkeit in der Düse oder durch Versehen einer Wegstrecke zwischen Austritt aus der Düse und Eintritt in ein Fällungsbad, einen Strahlzerfall des Flüssigkeitsstrahls in Tropfen mit enger Korngrößenverteilung herbeiführt,

C) die erzeugten Tropfen durch Einbringen in ein Fällungsbad, welches eine Flüssigkeit enthält, in der sich die Polymerisate nicht lösen, ausfällt und

D) in den Polymerpartikeln enthaltene Lösungsmittelreste und sonstige Verunreinigungen entfernt.

Als bevorzugte Diole der allgemeinen Formel I seien nachfolgend einige Verbindungen aufgeführt. Diese können, wie auch die Dihalogenverbindungen der Formel II einzeln oder in beliebigen Mischungen eingesetzt werden.

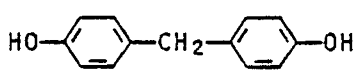

Di-(4-hydroxyphenyl)methan

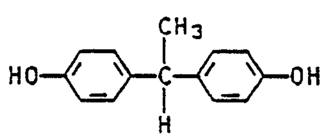

2,2-Di(4-hydroxyphenyl)ethan

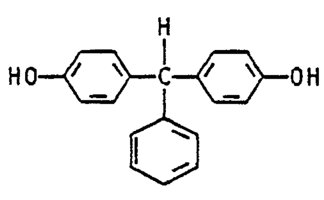

1-Phenyl-1,1-di-(4-hydroxyphenyl)-methan

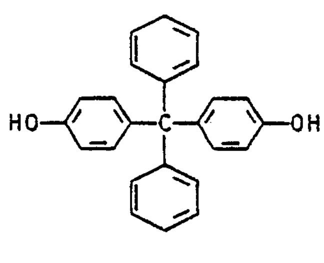

Diphenyl-di-(4-hydroxyphenyl)methan

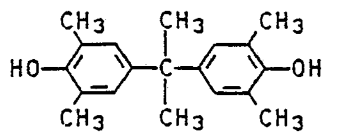

Tetramethylbisphenol A (2,2-Di-(4-hydroxy-3,5-dimethyl-phenyl)propan)

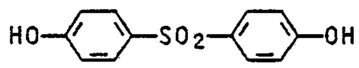

4,4'-Dihydroxydiphenylsulfon (Bisphenol S)

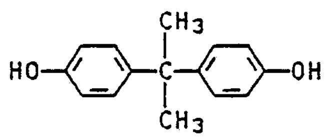

2,2'-Di(4-hydroxyphenyl)propan (Bisphenol A)

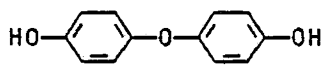

4,4'-Dihydroxydiphenylether

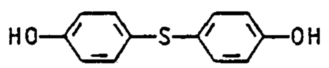

4,4'-Dihydroxydiphenylsulfid (Bisphenol T)

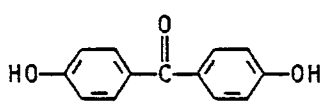

4,4'-Dihydroxybenzophenon

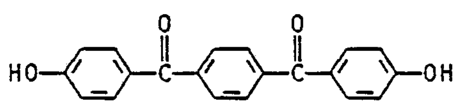

1,4-Di(4'-hydroxycarbonyl-phenyl)benzol

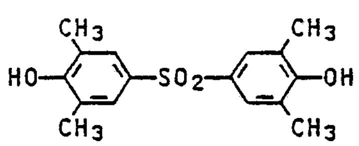

Tetramethylbisphenol S (3,3',5,5'-Tetramethyl-4,4-dihydroxy-diphenylsulfon)

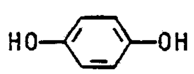

Hydrochinon

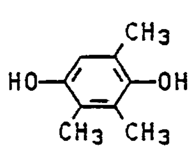

2,3,6-Trimethylhydrochinon

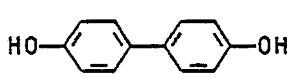

4,4'-Dihydroxydiphenyl

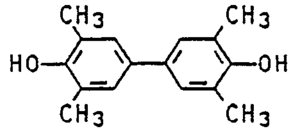

3,3',5,5'-Tetramethyldihydroxydiphenyl

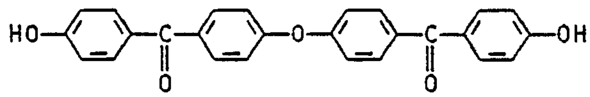

Dihydroxybenzophenonether

Von den vorstehend aufgeführten Dihydroxyverbindungen werden 4,4'-Dihydroxydiphenyl, 3,3',5,5'-Tetramethyl-4,4'-dihydroxydiphenyl, Tetramethyl-Bisphenol A, Bisphenol A, Bisphenol S, Bisphenol T und 2,3,6-Trimethylhydrochinon besonders bevorzugt.

Als Substituenten am Kern der Dihydroxyverbindungen I werden Alkyl-oder Alkoxygruppen mit 1 bis 6 C-Atomen wie Ethyl-, Propyl-, n, i-oder t-Butyl bzw. die entsprechenden Alkoxygruppen und Arylgruppen bevorzugt.

In den Dihalogenverbindungen der vorstehend genannten allgemeinen Formel II sind die Substituenten am Kern vorzugsweise Alkylgruppen mit 1 bis 4 C-Atomen, z.B. Methyl, i-oder n-Propyl oder t-Butyl oder Cl oder F.

Die folgenden Dihalogenverbindungen der allgemeinen Formel II seien als bevorzugte Beispiele aufgeführt.

Bezeichnung der Chlorverbindung

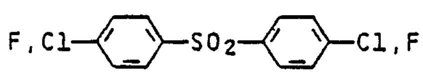

4,4'-Dichlordiphenylsulfon

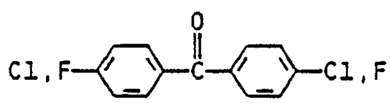

4,4'-Dichlorbenzophenon

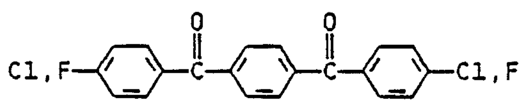

1,4-Di(4'-chlorcarbonylphenyl)-benzol

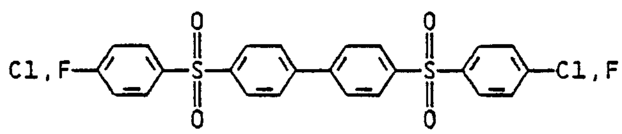

1,10-Di-(4'-chlorphenylsulfon)-diphenyl

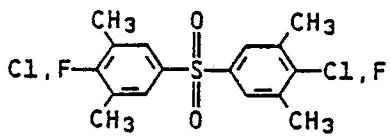

3,3',5,5'-Tetramethyl-4,4'-dichlordiphenylsulfon

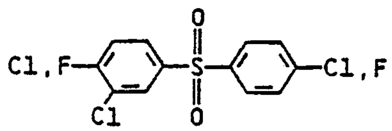

3'-Chlor-4,4'-Dichlordiphenylsulfon

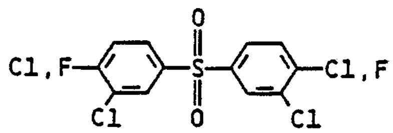

3,3',4,4'-Tetrachlordiphenylsulfon

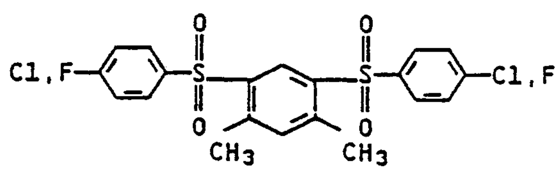

1,3-Dimethyl-4,6-di(4'-chlorphenylsulfon)benzol

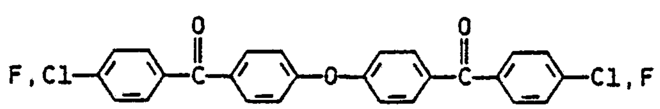

4,4'-Di(4-chlorphenylcarbonyl)diphenylether

Von den vorstehend aufgeführten Dihalogenverbindungen werden 3,3',5,5'-Tetramethyl-4,4'-dichlordiphenylsulfon, 1,10-Di(4'-Chlorphenylsulfondiphenyl, 4,4'-Difluorbenzophenon und 1,4-Di-(4-chlorcarbonylphenyl)benzol bevorzugt.

Im erfindungsgemäßen Verfahren können sowohl statistische als auch Blockcopolymere aus Dihydroxyverbindungen I und Dihalogenverbindungen II eingesetzt werden.

Vorzugsweise werden als Polymerisate Polyarylethersulfone mit wiederkehrenden Einheiten der Formeln III und IV

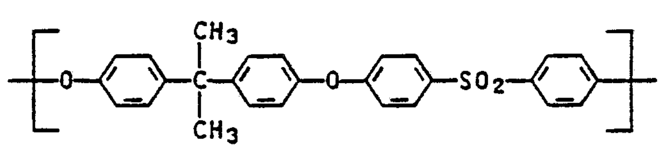

III

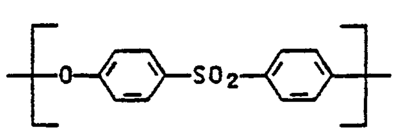

IV,

statistische Copolymerisate aus mindestens zwei Dihydroxyverbindungen und/oder mindestens zwei Dihalogenverbindungen und Blockcopolymerisate aus amorphen und/oder teilkristallinen Blöcken verwendet.

Die relative Viskosität der eingesetzten Polymerisate liegt im allgemeinen im Bereich von 0,3 bis 4,5, vorzugsweise von 0,35 bis 2,0 und insbesondere 0,35 bis 1,5 (gemessen in 1 gew.%iger Lösung in o-Dichlorbenzol/Phenol (1:1 Gewichtsverhältnis)). Dies entspricht im allgemeinen Molekulargewichten (Gewichtsmittelwerten) im Bereich von 10.000 bis 200.000.

Verfahren zur Herstellung der im erfindungsgemäßen Verfahren eingesetzten Polymerisate sind an sich bekannt und z.B. in der EP-A 113 112 und der EP-A 135 130 sowie der EP-A 1879 beschrieben.

Besonders bevorzugt wird die Polykondensation in aprotischen polaren Lösungsmitteln mit wasserfreien Alkalicarbonaten als Katalysatoren durchgeführt. Ein besonders gut geeignetes Lösungsmittel ist N-Methylpyrrolidon in Verbindung mit wasserfreiem $K_2CO_3$ als Katalysator. Als weitere aprotische Lösungsmittel seien beispielsweise Dimethylsulfoxid, Dimethylsulfon, Diphenylsulfon, Dimethylacetamid und Dimethylformamid genannt.

In diesen Lösungsmitteln ist das gebildete Polymerisat löslich und die Reaktionslösungen können direkt im erfindungsgemäßen Verfahren eingesetzt werden.

Die Reaktionsbedingungen hängen vom gewählten Lösungsmittel und dem angestrebten Molekulargewicht der Polymeren ab und sind an sich bekannt, so daß sich hier nähere Angaben erübrigen.

Die Konzentration des Polymeren im Lösungsmittel liegt im allgemeinen im Bereich von 5 bis 40, insbesondere von 10 bis 30 Gew.%.

Im Schritt A) des erfindungsgemäßen Verfahrens werden die Lösungen der Polymerisate mit einer Düse in eine Vielzahl von Flüssigkeitsstrahlen zerlegt. Dabei ist darauf zu achten, daß der Durchsatz nicht so hoch gewählt wird, daß bereits beim Austritt aus der Düse ein Zerstäuben erfolgt, da dann ein sehr ungleichmäßiges Tropfenspektrum erhalten wird.

Als bevorzugte Düsen werden Kapillaren mit einem Durchmesser von 0,1 bis 2,0 mm, insbesondere von 0,3 bis 1,0 mm und einem Durchsatz von 10 bis 3000 g/h, insbesondere von 400 bis 2000 g/h pro Kapillare eingesetzt. Es versteht sich, daß mehrere Kapillaren parallel geschaltet werden können. Der Druck vor der Kapillare liegt im allgemeinen im Bereich von 0,1 bis 8 bar (10 bis 800 kPa), insbesondere von 0,5 bis 3 bar. In den meisten Fällen reicht es aus, den Behälter mit der Lösung des Polymeren auf einem etwas höheren Niveau als die Düse anzubringen und den hydrostatischen Druck auszunutzen.

Nach Erzeugung des Flüssigkeitsstrahls wird durch Strahlzerfall die Bildung gleichmäßiger, d.h. gleich großer Tropfen, herbeigeführt. Dies kann z.B. einfach durch Vorsehen einer ausreichenden Wegstrecke zwischen Austritt aus der Düse und Eintritt in das Fällungsbad erfolgen. Tritt nämlich ein Flüssigkeitsstrahl aus einer Kapillare zunächst als glatter Faden oder Strahl aus, so bilden sich nach einer gewissen Strecke Wellen, die zum Zerfall des Strahls in gleich große Tropfen führen.

Andere Möglichkeiten für die technische Durchführung des gesteuerten Strahlzerfalls sind das Versetzen der Düse in Schwingungen oder das Pulsieren der Flüssigkeit in einer feststehenden Düse.

Das Versetzen der Kapillare in Schwingungen kann longitudinal oder transversal erfolgen. Zur Erzeugung longitudinaler Schwingungen kann die Düse z.B. an einer Membran befestigt werden, die über einen Schwinger mit Hilfe eines Tongenerators in longitudinale Schwingungen versetzt wird. Anstelle des Tongenerators kann auch ein piezoelektrischer Wandler eingesetzt werden.

Transversale Schwingungen werden im allgemeinen mit Vibratoren erzeugt.

Eine andere Möglichkeit des Strahlzerfalls ist das Pulsieren der Flüssigkeit in einer feststehenden Kapillare, z.B. durch einen Oszillator. Dabei durchläuft die zertropfende Flüssigkeit eine von einem Oszillator betriebene Vibrationskammer und zerfällt beim Austritt aus der Kapillare.

Die Frequenzen der Schwingungen bzw. Vibrationen liegen im allgemeinen im Bereich von 30 bis 1000 $s^{-1}$, insbesondere von 50 bis 800 $s^{-1}$.

Durch die Anwendung solcher periodischer Störungen ist es möglich, die Wegstrecke zwischen Austritt aus der Düse und Eintritt in das Fällungsbad zu verkürzen, ohne daß die Gleichmäßigkeit der Tropfengröße verschlechtert wird.

Aus dem Vorstehenden ergibt sich, daß die zwischen Austritt aus der Düse und Eintritt in das Fällungsbad liegende Wegstrecke (= Fallhöhe) in weiten Bereichen - abhängig von der Verfahrensvariante -variieren kann. Im allgemeinen haben sich Fallhöhen im Bereich von 0,1 bis 2 m, insbesondere von 0,2 bis 1,5 m als vorteilhaft erwiesen, wobei aus den vorstehend genannten Gründen die unteren Werte beim Strahlzerfall durch periodische Störungen gelten.

In Schritt C) werden die in Schritt B) erzeugten Tropfen in ein Fällungsbad eingebracht, welches eine Flüssigkeit enthält, in der sich die Polymerisate nicht lösen. Da die Düse in der Regel oberhalb des Fällungsbades angebracht ist, gelangen die aus dem Strahl hergestellten Tropfen durch die Schwerkraft in das Fällungsbad, so daß keine speziellen Vorrichtungen hierfür erforderlich sind.

Als Nicht-Lösungsmittel (Fällungsmittel) eignen sich z.B. Wasser und Alkohole ROH mit 1 bis 8 C-Atomen, wie Methanol, Ethanol, Pentanol etc. sowie Gemische aus Wasser und derartigen Alkoholen.

Die Temperatur des Fällungsbades ist an sich nicht kritisch und liegt im allgemeinen zwischen Raumtemperatur und einer Temperatur dicht unter dem Siedepunkt des Fällungsmediums. Um Verluste durch Verdampfen zu vermeiden, kann die gesamte Vorrichtung (Düse und Fällungsbad) als geschlossenes System ausgelegt werden und unter Schutzgas oder geringem Überdruck gehalten werden. Es ist jedoch auch möglich und häufig vorteilhaft bei Normaldruck zu arbeiten.

Im abschließenden Schritt D) werden die in den beim Ausfällen gebildeten Polymerteilchen noch enthaltenen Lösungsmittelreste und sonstige Verunreinigungen nach Abtrennung der Polymerteilchen aus dem Fällungsmedium entfernt.

Dies kann nach an sich bekannten und in der Literatur beschriebenen Verfahren zur Reinigung von Feststoffpartikeln erfolgen. Nur beispielsweise seien hier Waschen und anschließendes Trocknen (falls keine schwerflüchtigen Verunreinigungen mehr vorhanden sind, kann unter Umständen die Reinigung direkt durch Verdampfen des Lösungsmittels erfolgen) und bekannte Extraktionsverfahren genannt.

Als besonders vorteilhaft hat es sich erwiesen, die Entfernung des Lösungsmittels und evtl. vorhandener Verunreinigungen mit Hilfe der Fest-Flüssig-Extraktion durchzuführen. Als Lösungsmittel sind z.B. Wasser, Alkohole mit 1 bis 8 C-Atomen, insbesondere Methanol oder Ethanol, Aceton sowie deren Gemische verwendbar.

Die Bedingungen bei der Extraktion hängen natürlich von der Art des gewählten Extraktionslösungsmittels ab, können aber ansonsten in weiten Grenzen variiert werden. So kann unter Überdruck oder bei verringertem Druck und gegebenenfalls unter Schutzgasatmosphäre gearbeitet werden. Im allgemeinen wird bei atmosphärischem Druck gearbeitet.

Als Schutz-oder Inertgase eignen sich Stickstoff oder Edelgase, insbesondere Argon.

Die Extraktionstemperatur hängt vom gewählten Extraktionsmittel ab und liegt vorzugsweise dicht unter dem Siedepunkt desselben.

Nach Entfernung des Extraktionslösungsmittels können die teilchenförmigen Polymerisate in an sich bekannter Weise konfektioniert und für den weiteren Gebrauch vorbereitet werden.

Nach dem erfindungsgemäßen Verfahren erhält man teilchenförmige Polymerisate mit sehr enger Größenverteilung, d.h. sehr gleichmäßige Teilchen, was sich bei der weiteren Konfektionierung vorteilhaft auswirkt. Die mittlere Teilchengröße liegt im allgemeinen im Bereich von 100µm bis 10 mm, vorzugsweise von 300µm bis 5 mm und insbesondere von 400µm bis 4 mm.

Innerhalb eines Intervalls von ±10 % der mittleren Teilchengröße liegt im allgemeinen die Größe von mindestens 70 % aller Teilchen, insbesondere von mindestens 75 %.

<u>Beispiele 1 bis 4</u>

Es wurden Lösungen folgender Polymerisate hergestellt:

L1: 18 gew.%ige Lösung (in N-Methylpyrrolidon) eines Polyarylethersulfons mit wiederkehrenden Einheiten der allgemeinen Formel III, wobei das Polymere eine reduzierte Viskosität von 0,6 dl/g, gemessen in 1 gew.%iger Lösung in o-Dichlorbenzol/Phenol (Gewichtsverhältnis 1:1) aufwies.

L2: 18 gew.%ige Lösung (in N-Methylpyrrolidon) eines Polyarylethersulfons mit wiederkehrenden Einheiten der allgemeinen Formel IV, wobei das Polymere eine reduzierte Viskosität von 0,7 dl/g, gemessen wie bei L1, aufwies.

L3: 18 gew.%ige Lösung (in N-Methylpyrrolidon) eines statistischen Copolymerisats aus Bisphenol A, 4,4'-Dihydroxydiphenylsulfon (Molverhältnis 1:1) und 4,4'-Dichlordiphenylsulfon mit einer reduzierten Viskosität von 0,8 dl/g, gemessen wie bei L1.

L4: 18 gew.%ige Lösung (in N-Methylpyrrolidon) eines Blockcopolymerisats aus je 50 mol% Blöcken mit der Struktureinheit III und IV mit einem Molekulargewicht (Gewichtsmittelwert) der Blöcke von 15000 und einer Viskositätszahl von 71, bestimmt nach DIN 53 726/8.

Die Herstellung der Polymeren für die Lösungen L1 bis L3 erfolgte auf an sich bekannte Weise durch Umsetzung der Monomeren in N-Methylpyrrolidon in Gegenwart von Kaliumcarbonat.

Das Blockcopolymere für die Lösung L4 wurde durch eine zweistufige Umsetzung hergestellt, wobei zunächst 4,4'-Dichlordiphenylsulfon und Bisphenol A (3 % molarer Überschuß) in Gegenwart von Kaliumcarbonat (10 % molarer Überschuß) in einer 3:1-Mischung aus N-Methylpyrrolidon und Chlorbenzol 4 h bei 170 und anschließend 4 h bei 190°C umgesetzt wurden. Anschließend wurden 4,4'-Dihydroxydiphenylsulfon und 4,4'-Dichlordiphenylsulfon (8 % molarer Überschuß) sowie Kaliumcarbonat (10 % molarer Überschuß, bezogen auf Gesamtmonomere der Stufe II) und die 1,5fache Gewichtsmenge (bezogen auf Gesamtmonomere der Stufe II) N-Methylpyrrolidon zugegeben und 2 h bei 170 und 6 h bei 190°C kondensiert. Durch Einleiten von $CH_3Cl$ wurde die Polykondensation abgebrochen.

Die Polymerisatlösungen L1 bis L4 wurden mit Hilfe einer Kapillardüsenplatte mit 20 Kapillaren mit einem Kapillardurchmesser von 0,8 mm in Flüssigkeitsstrahlen zerlegt. Der Durchsatz pro Kapillare betrug 1250 g/h. Nach Austritt aus den Kapillaren durchquerten die Flüssigkeitsstrahlen eine Wegstrecke von 0,5 m bevor sie in ein Fällbad aus Wasser gelangten. Nach Abtrennung und Extraktion von Lösungsmittelresten und Verunreinigungen mit Hilfe von Wasser wurden die Polymerisatteilchen getrocknet. Die mittlere Teilchengröße (Gewichtsmittelwert) der Produkte betrug 1,5 mm und 75 Gew.% aller Teilchen hatten einen Durchmesser im Bereich von ± 10 % um den Mittelwert.

Die Teilchen hatten eine offenzellige Schaumstruktur.

## Ansprüche

1. Verfahren zur Erzeugung teilchenförmiger Polymerisate, erhältlich durch Polykondensation von Diolen der allgemeinen Formel I

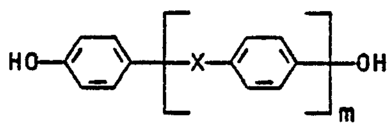

I

oder deren kernsubstituierten $C_1$-$C_6$-Alkyl-, $C_1$-$C_6$-Alkoxy-, Aryl-, Cyano-, Cl-oder F-Derivaten, mit Dihalogenverbindungen der allgemeinen Formel II

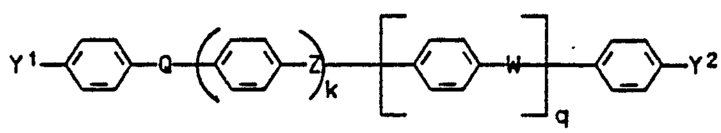

II

oder deren kernsubstituierten $C_1$-$C_6$-Alkyl-, $C_1$-$C_6$-Alkoxy-, Aryl-, Chlor-oder Fluorderivaten, wobei

X und Z eine chemische Bindung,

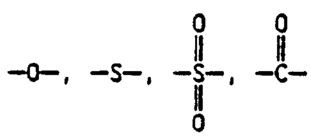

oder

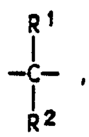

,

$Y^1$ und $Y^2$ Cl oder F,

Q, W

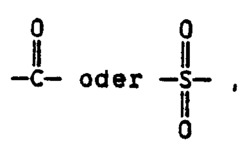

,

$R^1$ und $R^2$ Wasserstoff, Alkylgruppen mit 1 bis 6 C-Atomen, Alkoxygruppen mit 1 bis 6 C-Atomen oder Arylgruppen oder deren halogenierte Derivate darstellen, und
k, m und q den Wert 0 oder 1 haben,
dadurch gekennzeichnet, daß man

A) eine Lösung der Polymerisate aus einer Düse in einer Vielzahl von Flüssigkeitsstrahlen austreten läßt,

B) durch Versetzen der Düse in longitudinale oder transversale Schwingungen oder durch Pulsieren der Flüssigkeit in der Düse oder durch Vorsehen einer Wegstrecke zwischen Austritt aus der Düse und Eintritt in ein Fällungsbad einen Strahlzerfall des Flüssigkeitsstrahls in Tropfen mit enger Korngrößenverteilung herbeiführt,

C) die erzeugten Tropfen durch Einbringen in ein Fällungsbad, welches eine Flüssigkeit enthält, in der sich die Polymerisate nicht lösen, ausfällt und

D) in den Polymerpartikeln enthaltene Lösungsmittelreste und sonstige Verunreinigungen entfernt.

2. Verfahren nach Anspruch 1, dadurch gekennzeichnet, daß man als Düse in Schritt A) Kapillaren mit einem Durchmesser von 0,1 bis 2,0 mm und einem Durchsatz von 10 bis 3000 g/h pro Kapillare verwendet.

3. Verfahren nach den Ansprüchen 1 und 2, dadurch gekennzeichnet, daß als Polymerisat ein Polyarylethersulfon mit wiederkehrenden Einheiten der allgemeinen Formeln III und/oder IV

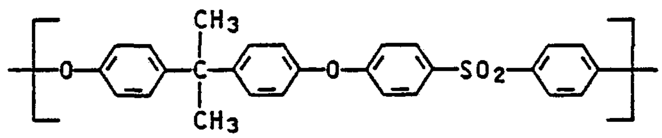

III

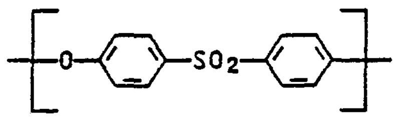

IV

verwendet wird.

4. Verfahren nach den Ansprüchen 1 und 2, dadurch gekennzeichnet, daß als Polymerisat ein statistisches Copolymerisat aus mindestens zwei Dihydroxyverbindungen und/oder mindestens zwei Dihalogenverbindungen verwendet wird.

5. Verfahren nach den Ansprüchen 1 und 2, dadurch gekennzeichnet, daß als Polymerisat ein Blockcopolymerisat mit amorphen und/oder teilkristallinen Blöcken verwendet wird.